# EUROPEAN PATENT APPLICATION

(11) **EP 4 795 925 A1**
(43) Date of publication of application: **26.08.2026**
(21) Application number: 26152210.6
(22) Date of filing: 16.01.2026
(51) Int. Cl.: A01F 15/07, A01F 15/08

(54) **BALE PRESENCE SENSING FOR ROUND BALER**

(30) Priority: 25.02.2025 US 202519062165
(71) Applicant: Deere & Company, Moline, IL 61265 (US)
(72) Inventor: Derscheid, Daniel E., Mannheim (DE)
(74) Representative: Stein, Stefan

(57) **Abstract**

A round baler implement includes a housing and a gate rotatably attached to the housing for rotation about a gate rotation axis, between a closed position and an open position. An object detection sensor is positioned to detect data related to an object positioned vertically below the gate when the gate is disposed in the open position, and communicate a data signal indicative of the detected data. A baler controller determines the presence of an object positioned below the gate that may interfere with movement of the gate from the open position into the closed position, and then communicates a control signal when the object is determined to be positioned to interfere with movement of the gate to prevent the gate from closing onto the object.

## Description

### TECHNICAL FIELD

The disclosure generally relates to a round baler implement, and a baling system including a tow vehicle and the round baler implement.

### BACKGROUND

There are a wide variety of different types of machines that generate bales of material. Such balers can bale material like hay, straw, silage, cotton, recycled paper products, etc. One type of machine produces a bale having a cylindrical shape. Such a machine is often referred to as a round baler. Round baler implements typically include a housing and a gate. The gate is rotatably attached to a rearward end of the housing. A bale formation system defining a baling chamber is disposed within an interior region between the housing and the gate. The gate rotates between a closed position for forming the bale within the baling chamber, and an open position for discharging a completed bale rearward from the baling chamber.

The gate rotates about a gate rotation axis, which extends transverse relative to a central longitudinal axis of the round baler implement. During rotation between the closed position and the open position, a lower forward edge of the gate swings rearward and upward providing room for the bale to be discharged from the baling chamber. Typically, when the bale is discharged from the baling chamber, the bale rolls away from the round baler implement, thereby providing room for the gate to rotate from the open position into the closed position. However, occasionally, either the bale does not roll far enough, or for example due to ground terrain features, may roll toward the baler implement, whereby the bale is positioned below the raised gate. With the bale positioned below the raised gate, the bale blocks and/or prevents movement of the gate from the open position into the closed position. Attempts to close the gate when a bale blocks movement of the gate may result in the gate contacting the bale and potentially damaging components of the round baler implement located on a bottom surface of the gate.

### SUMMARY

A round baler implement is provided. The round baler implement includes a support structure, and a plurality of ground engaging elements coupled to the support structure for moveably supporting the support structure relative to a ground surface. A housing is attached to the support structure. A gate is rotatably attached to the housing for rotation about a gate rotation axis, between a closed position and an open position. An object detection sensor is positioned to detect data related to an object positioned vertically below the gate when the gate is disposed in the open position, and communicate a data signal indicative of the detected data. A baler controller includes a processor and a memory having an object detection algorithm stored thereon. The processor is operable to execute the bale detection algorithm to receive the data signal from the object detection sensor. The baler controller may then determine the presence of an object positioned below the gate, from the data signal, that may interfere with movement of the gate from the open position into the closed position. The baler controller may then communicate a control signal when the object is determined to be positioned to interfere with movement of the gate from the open position into the closed position to prevent the gate from closing onto the object.

In one aspect of the disclosure, the object detection sensor may be positioned to aim substantially vertically downward when the gate is disposed in the open position to detect data vertically below the gate when the gate is disposed in the open position.

In one aspect of the disclosure, the gate includes a forward-facing end and a bottom surface intersecting each other along a lower forward edge. The lower forward edge extends transversely across a width of the gate. The forward-facing end extends substantially vertically and abuts the housing, and the bottom surface is disposed substantially horizontal relative to the ground surface, when the gate is disposed in the closed position. The forward-facing end is disposed substantially horizontal, and the bottom surface is positioned substantially vertically relative to the ground surface, when the gate is disposed in the open position. In one aspect of the disclosure, the object detection sensor may be mounted to the gate proximate the lower forward edge of the gate.

In one aspect of the disclosure, the object detection sensor may include one of, but is not limited to, an ultra-sonic sensor, a lidar sensor, a radar sensor, or an image sensor.

In one aspect of the disclosure, the round baler implement may include a gate actuator that is selectively controllable to move the gate between the open position and the closed position. The gate actuator may include, but is not limited to, a hydraulic cylinder or an electric actuator.

In one implementation of the disclosure, the control signal may include an actuator control signal that is operable to control the gate actuator to maintain the gate in the open position.

In another implementation of the disclosure, the control signal may include a communication signal operable to control a communicator to generate a warning message indicating an object below the gate. Alternatively and/or additionally, the communication signal may control the communicator to display operating instructions requesting an operator move the support structure relative to the detected object.

On one implementation of the disclosure, the control signal may include a drive system signal that is operable to control a drive system of an associated tow vehicle. The drive system signal may control the drive system to move the support structure relative to the detected object so that the gate is clear of the object and free to move from the open position into the closed position without obstruction.

In one aspect of the disclosure, when an object is not detected beneath the gate, the processor may be operable to execute the bale detection algorithm to communicate a gate close signal for initiating movement of the gate from the open position to the closed position.

Accordingly, the round bale implement disclosed herein is configured to detect when an object, e.g., a bale, is disposed beneath the gate when the gate is raised and in the open position, and which would prevent the gate from closing. Once the object beneath the gate is detected, the baler controller may, for example, prevent the gate from closing, signal an operator to move the round baler implement, signaling the operator to warn them of the object, automatically moving the round baler implement, etc. By doing so, potential damage to the gate may be avoided by preventing the gate from closing onto the object.

According to the invention, a baling system is disclosed. The baling system comprising a tow vehicle coupled to a round baler implement, in particular a round baler implement according to at least one of the claims 1 to 11, for moving the round baler implement across a ground surface.

In an embodiment, the round baler implement includes: a housing; a gate rotatably attached to the housing for rotation about a gate rotation axis between a closed position and an open position; a gate actuator selectively controllable to move the gate between the open position and the closed position; an object detection sensor positioned to detect data related to an object positioned vertically below the gate when the gate is disposed in the open position, and communicate a data signal indicative of the detected data; a baler controller having a processor and a memory including an object detection algorithm stored thereon, wherein the processor is operable to execute the bale detection algorithm to: receive the data signal from the object detection sensor; determine the presence of an object positioned below the gate, from the data signal, that may interfere with movement of the gate from the open position into the closed position; communicate an actuator control signal to the gate actuator for controlling the gate actuator to maintain the gate in the open position when the object is determined to be positioned to interfere with movement of the gate from the open position into the closed position to prevent the gate from closing onto the object.

In a further embodiment, the tow vehicle includes a drive system for propelling the tow vehicle and the round baler implement, and wherein the processor is operable to execute the bale detection algorithm to communicate a drive system signal for controlling the drive system of the tow vehicle to move the round baler implement relative to the detected object.

In a further embodiment, the processor is operable to execute the bale detection algorithm to communicate a gate close signal to the gate actuator for initiating movement of the gate from the open position to the closed position when an object is not detected beneath the gate.

In a further embodiment, the object detection sensor is mounted to the gate proximate a lower forward edge of the gate.

In a further embodiment, the object detection sensor is positioned to aim substantially vertically downward when the gate is disposed in the open position to detect data vertically below the lower forward edge of the gate when the gate is disposed in the open position.

In a further embodiment, the gate includes a forward-facing end and a bottom surface intersecting each other along the lower forward edge extending transversely across a width of the gate, with the forward-facing end extending substantially vertically and abutting the housing and the bottom surface disposed substantially horizontal relative to the ground surface when the gate is disposed in the closed position, and with the forward-facing end disposed substantially horizontal and the bottom surface positioned substantially vertically relative to the ground surface when the gate is disposed in the open position.

In a further embodiment, the object detection sensor includes one of an ultra-sonic sensor, a lidar sensor, a radar sensor, or an image sensor.

In a further embodiment, the processor is operable to execute the bale detection algorithm to communicate a communication signal to a communicator disposed within the tow vehicle, wherein the communication signal is operable to control the communicator to generate a warning message.

In a further embodiment, the processor is operable to execute the bale detection algorithm to communicate a communication signal to a communicator disposed within the tow vehicle, wherein the communication signal is operable to control the communicator to generate operating instructions requesting an operator move the round baler implement relative to the detected object.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic side view of a baling system showing a tow vehicle and a round baler implement showing a rear gate in a closed position.
FIG. 2 is a schematic side view of the round baler implement with the rear gate thereof disposed in an open position and with a bale positioned directly beneath the open gate.
FIG. 3 is a flowchart representing a method of controlling the baling system.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

The terms "forward", "rearward", "left", and "right", when used in connection with a moveable implement and/or components thereof are usually determined with reference to the direction of travel during operation, but should not be construed as limiting. The terms "longitudinal" and "transverse" are usually determined with reference to the fore-and-aft direction of the implement relative to the direction of travel during operation, and should also not be construed as limiting.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

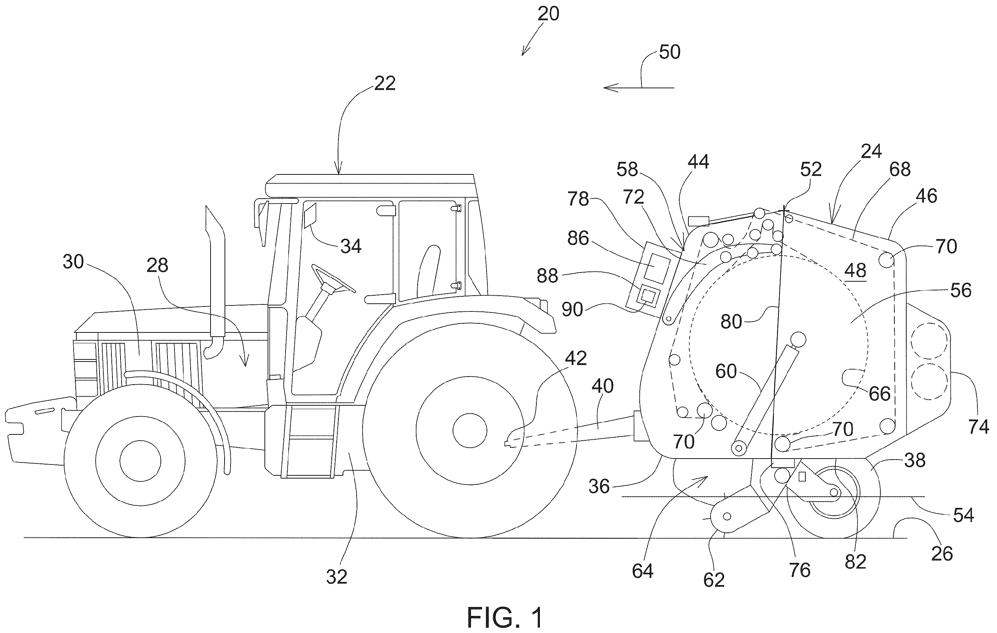

Referring to the Figures, wherein like numerals indicate like parts throughout the several views, a baling system is generally shown at 20 in FIG. 1. The baling system 20 includes a tow vehicle 22 and a round baler implement 24.

Referring to FIG. 1, the tow vehicle 22 is coupled to the round baler implement 24, and is configured for moving the round baler implement 24 across a ground surface 26. The tow vehicle 22 may include for example, but is not limited to, an agricultural tractor or other similar moveable platform. The tow vehicle 22 includes a drive system 28 operable to generate a motive force for rotating drive elements, e.g., drive wheels and/or drive tracks, for propelling the tow vehicle 22 across the ground surface 26. The drive system 28 may include, but is not limited to, a prime mover 30 coupled to a drive train 32. The prime mover 30 may include, but is not limited to, an internal combustion engine, an electric motor, or a combination of both. The drive train 32 may include a transmission, drive shafts, axles, differential drives, etc. The drive system 28 is responsive to a drive system 28 control signal for generating torque to move the tow vehicle 22 and the round baling implement across the ground surface 26. The components and operation of the drive system 28 are understood by those skilled in the art, and are therefore not described in greater detail herein.

The tow vehicle 22 may further include a communicator 34. The communicator 34 may include a device operable to communicate a message to an operator of the tow vehicle 22. The communicator 34 may include, but is not limited to, a warning light, an audio speaker, a haptic device, a display screen, or some other input/output device. In one implementation, the communicator 34 may include, as an example, a touchscreen display. The communicator 34 is responsive to a communication signal to generate a message or communication.

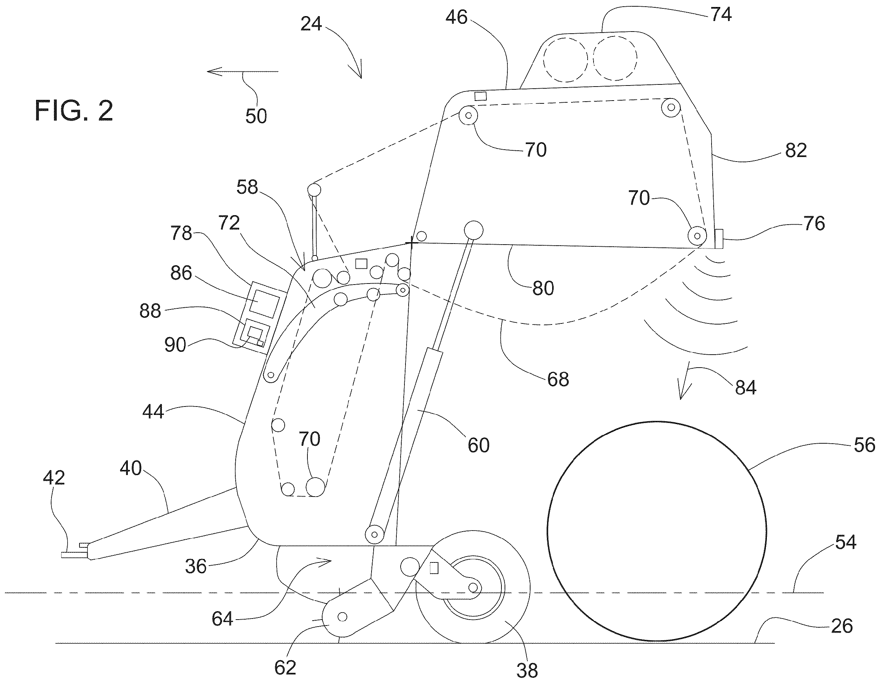

Referring to FIGS. 1 and 2, the round baler implement 24 includes a support structure 36. The support structure 36 may include, but is not limited to, a frame and other structural components connected together to provide structural support to other components and panels of the round baler implement 24. One or more ground engaging elements 38, such as but not limited to one or more wheels and/or tracks, are attached to and rotatably supported by the support structure 36. The ground engaging elements 38 moveably support the support structure 36 relative to the ground surface 26. A tongue 40 may be coupled to the support structure 36 at a forward end of the of the support structure 36. A hitch arrangement 42 may be included with the tongue 40. The hitch arrangement 42 may be used to attach the round baler implement 24 to the tow vehicle 22. In other embodiments, the round baler implement 24 may be self-propelled, in which case the tow vehicle 22 and the round baler implement 24 are combined as a single, self-propelled vehicle.

The round baler implement 24 includes a housing 44. The housing 44 is attached to and supported by the support structure 36. The housing 44 may include one or more walls or panels that at least partially enclose and/or define an interior region 48. The round baler implement 24 further includes a gate 46. The gate 46 may include one or more walls or panels that at least partially enclose and/or define the interior region 48. As such, the housing 44 and the gate 46 cooperate to define the interior region 48 therebetween.

The gate 46 is attached to and rotatably supported by the housing 44. The gate 46 is positioned adjacent a rearward end of the support structure 36 relative to a direction of travel 50 of the round baler implement 24 while gathering crop material, and is pivotably moveable about a gate rotation axis 52. The gate rotation axis 52 is generally horizontal and perpendicular to a central longitudinal axis 54 of the round baler implement 24. The central longitudinal axis 54 of the round baler implement 24 extends between the forward end and the rearward end of the round baler implement 24. The gate 46 is moveable between a closed position (shown in FIG. 1) for forming a bale 56 within a bale formation system 58 disposed within the interior region 48, and an open position (shown in FIG. 2) for discharging the bale 56 from the interior region 48 onto the ground surface 26.

A gate actuator 60 interconnects the gate 46 and one of the housing 44 and/or the support structure 36. The gate actuator 60 is selectively controllable via an actuator control signal to move the gate 46 between the open position and the closed position. The gate actuator 60 may include, but is not limited to, a hydraulic cylinder or other similar device capable of causing the gate 46 to rotate about the gate rotation axis 52 relative to the housing 44.

The round baler implement 24 includes a pick-up 62 disposed proximate the forward end of the support structure 36. The pick-up 62 gathers crop material from the ground surface 26 and directs the gathered crop material toward and into an inlet 64 of the interior region 48. The pickup may include, but is not limited to tines, forks, augers, conveyors, baffles, etc., for gathering and moving the crop material. The round baler implement 24 may be equipped with a pre-cutter (not shown), disposed between the pickup and the inlet 64. As such, the pre-cutter is disposed downstream of the pickup and upstream of the inlet 64 relative to movement of the crop material. As is understood by those skilled in the art, the pre-cutter cuts or chops the crop material into smaller pieces.

The bale formation system 58 is disposed within the interior region 48, between the housing 44 and the gate 46, and defines a baling chamber 66, within which the bale 56 is formed. The bale formation system 58 is operable to form the bale 56 to have a cylindrical shape. The bale formation system 58 may be configured as a fixed chamber system or a variable chamber system. As understood by those skilled in the art, although not shown in the Figures, a fixed chamber system includes a plurality of rollers attached to and supported by the support structure 36, the housing 44, and/or the gate 46. The plurality of rollers extend transverse to the direction of travel 50 during operation, and their respective centerlines are arranged in a circular orientation to define a cylindrical baling chamber 66 therebetween. The plurality of rollers are fixed in position relative to the support structure 36 during formation of the bale 56 within the baling chamber 66, thereby defining the baling chamber 66 having a fixed size.

Referring to FIGS. 1 and 2, and as is understood by those skilled in the art, the example implementation of the round baler implement 24 is shown configured having a variable chamber system. The variable chamber system includes at least one, and may include a plurality of longitudinally extending side-by-side forming belts 68 that are supported by a plurality of rollers 70.

The forming belts 68 define the baling chamber 66 and move in an endless loop to form crop material into the bale 56 having the cylindrical shape. The bale 56 is formed by the forming belts 68 and one or more side walls of the housing 44 and gate 46. As is understood by those skilled in the art, a group of the plurality of rollers 70 is moveable relative to the support structure 36, the housing 44, and/or the gate 46 during formation of the bale 56 to control the position of the forming belts 68 defining the baling chamber 66 to vary the diametric size of the baling chamber 66 as the diametric size of the bale 56 increases. In this manner, the forming belts 68 may maintain a constant pressure against the bale 56 during formation thereof as the diametric size of the bale 56 increases.

In the example implementation shown in the figures and described herein, in which the bale formation system 58 includes the variable chamber baler, the crop material is directed through the inlet 64 and into the baling chamber 66, whereby the forming belts 68 roll the crop material in a spiral fashion into the bale 56 having the cylindrical shape. The forming belts 68 apply a constant pressure to the crop material as the crop material is formed into the bale 56. A belt tensioner 72 continuously moves one or more of the rollers 70, and thereby the forming belts 68, radially outward relative to the centerline of the cylindrical bale 56 as a diameter of the bale 56 increases. The belt tensioner 72 maintains the appropriate tension in the belts to obtain the desired density of the crop material.

As shown in FIGS. 1 and 2, the round baler implement 24 may include a wrap system 74. The wrap system 74 is operable to wrap the bale 56 with a wrap material inside the baling chamber 66. Once the bale 56 is formed to a desired size, the wrap system 74 feeds the wrap material into the baling chamber 66 to wrap the bale 56 and thereby secure the crop material in a tight package and maintain the desired shape of the bale 56. The wrap material may include, but is not limited to, a twine, a net mesh, or a solid plastic wrap. Movement of the gate 46 into the open position simultaneously moves the belts clear of the formed bale 56 and allows the formed and wrapped bale 56 to be discharged through the rearward end of the baling chamber 66.

The round baler implement 24 includes an object detection sensor 76. The object detection sensor 76 is positioned to detect data related to an object positioned vertically below the gate 46 when the gate 46 is disposed in the open position. The object detection sensor 76 further communicates a data signal indicative of the detected data to a baler controller 78, described in greater detail below. The object detection sensor 76 may include one of, but is not limited to, an ultra-sonic sensor, a lidar sensor, a radar sensor, or an image sensor.

As shown in FIG. 2, the object detection sensor 76 may be positioned to aim substantially vertically downward when the gate 46 is disposed in the open position to detect data vertically below the gate 46 when the gate 46 is disposed in the open position. The gate 46 includes a forward-facing end 80 and a bottom surface 82 intersecting each other along a lower forward edge, which extends transversely across a width of the gate 46. When the gate 46 is disposed in the closed position, the forward-facing end 80 extends substantially vertically and abuts the housing 44, and the bottom surface 82 is disposed substantially horizontal relative to the ground surface 26. When the gate 46 is disposed in the open position, the forward-facing end 80 is disposed substantially horizontal and the bottom surface 82 is positioned substantially vertically relative to the ground surface 26. In one implementation, the object detection sensor 76 may be mounted to the gate 46 proximate the lower forward edge of the gate 46, whereby when the gate 46 is disposed in the open position, a sensing direction 84 of the object detection sensor 76 is directed or aimed substantially vertically downward toward the ground surface 26.

The baler controller 78 is disposed in communication with the object detection sensor 76. The baler controller 78 is operable to receive data signals from the object detection sensor 76, and communicate a control signal to one or more components of the tow vehicle 22 and/or the round baler implement 24. While the baler controller 78 is generally described herein as a singular device, it should be appreciated that the baler controller 78 may include multiple devices linked together to share and/or communicate information therebetween. Furthermore, it should be appreciated that the baler controller 78 may be located on the round baler implement 24 or located remotely from the round baler implement 24, such as but not limited to the tow vehicle 22.

The baler controller 78 may alternatively be referred to as a computing device, a computer, a controller, a control unit, a control module, a module, etc. The baler controller 78 includes a processor 86, a memory 88, and all software, hardware, algorithms, connections, sensors, etc., necessary to manage and control the operation of the baling system 20. As such, a method may be embodied as a program or algorithm operable on the baler controller 78. It should be appreciated that the baler controller 78 may include any device capable of analyzing data from various sensors, comparing data, making decisions, and executing the required tasks.

As used herein, "controller" is intended to be used consistent with how the term is used by a person of skill in the art, and refers to a computing component with processing, memory, and communication capabilities, which is utilized to execute instructions (i.e., stored on the memory 88 or received via the communication capabilities) to control or communicate with one or more other components. In certain embodiments, the baler controller 78 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The baler controller 78 may be in communication with other components on the tow vehicle 22 and/or the round baler implement 24, such as hydraulic components, electrical components, and operator inputs within an operator station of an associated work vehicle. The baler controller 78 may be electrically connected to these other components wirelessly or via a wiring harness such that messages, commands, and electrical power may be transmitted between the baler controller 78 and the other components. Although the baler controller 78 is referenced in the singular, in alternative embodiments the configuration and functionality described herein can be split across multiple devices using techniques known to a person of ordinary skill in the art.

The baler controller 78 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 88 may include any non-transitory/tangible medium which participates in providing data or computer-readable instructions. The memory 88 may be non-volatile or volatile. Non-volatile media may include, for example, optical or magnetic disks and other persistent memory. Example volatile media may include dynamic random access memory (DRAM), which may constitute a main memory. Other examples of embodiments for memory 88 include a floppy, flexible disk, or hard disk, magnetic tape or other magnetic medium, a CD-ROM, DVD, and/or any other optical medium, as well as other possible memory devices such as flash memory.

The baler controller 78 includes the tangible, non-transitory memory 88 on which are recorded computer-executable instructions, including an object detection algorithm 90. The processor 86 of the baler controller 78 is configured for executing the object detection algorithm 90. The object detection algorithm 90 implements a method of controlling the baling system 20, described in detail below.

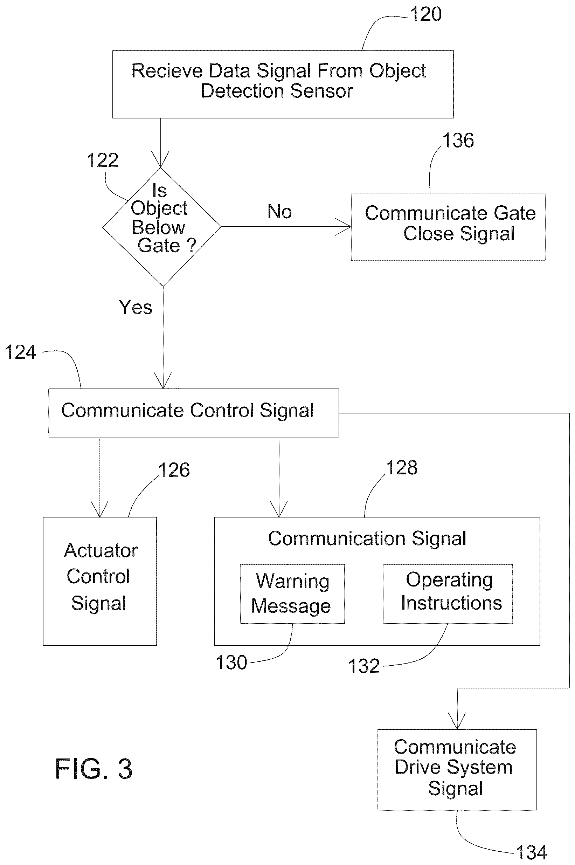

The baler controller 78 is configured to receive the data signal from the object detection sensor 76. The step of the baler controller 78 receiving the data signal from the object detection sensor 76 is generally indicated by box 120 shown in FIG. 3. As noted above, the data signal is indicative of objects positioned vertically below the gate 46 when the gate 46 is disposed in the open position. Based on the data signal received from the object detection sensor 76, the baler controller 78 may determine the presence of an object, e.g., the bale 56, positioned below the gate 46 that may interfere with movement of the gate 46 from the open position into the closed position. The step of determining the presence of the object positioned below the gate 46 is generally indicated by box 122 shown in FIG. 3. The object may include for example, but is not limited to, a round bale 56 that has been recently discharged from the baling chamber 66 of the round baler implement 24, and which has come to rest directly below the gate 46. However, it should be appreciated that the object may differ from the example implementation described herein.

The manner in which the baler controller 78 may identify the object below the gate 46 is dependent upon the type of sensor utilized for the object detection sensor 76. For example, if the object detection sensor 76 is implemented as an image sensor, then the baler controller 78 may use image analysis techniques and programs known to those skilled in the art to identify the presence of the object in captured images. If the object detection sensor 76 is implemented as a radar sensor or a lidar sensor, then the baler controller 78 may analyze the returned signals therefrom to identify an object below the gate 46, as is understood by those skilled in the art.

When the baler controller 78 has determined the existence or presence of the object positioned below the gate 46 that will interfere with movement of the gate 46 from the open position into the closed position, then the baler controller 78 may communicate a control signal to one or more components of the baling system 20 to prevent the gate 46 from closing onto the object, and thereby potentially preventing damage to the gate 46 and/or components disposed thereon. The step of communicating the control signal is generally indicated by box 124 shown in FIG. 3.

In one example implementation, the control signal may include an actuator control signal communicated to the gate actuator 60. The actuator control signal to the gate actuator is generally indicated by box 126 shown in FIG. 3. The actuator control signal is configured to control the gate actuator 60 to maintain the gate 46 in the open position. For example, the actuator control signal may maintain the gate actuator 60 in an extended position in order to maintain the gain in the open position, thereby preventing the gate 46 from closing onto the object, e.g., the bale 56, disposed below the gate 46. The actuator control signal may include an electrical signal and/or an electro/hydraulic signal that controls a valve or motor associated with the gate actuator 60 as is understood in the art. It should be appreciated that the actuator control signal may differ from the example implementation described herein, and is dependent upon the specific type and operation of the gate actuator 60.

In another example implementation, the control signal may include a communication signal communicated to the communicator 34. The communication signal is generally indicated by box 128 shown in FIG. 3. The communication signal may be configured to control the communicator 34 to generate a warning message 130. For example, the communication signal may control the communicator 34 to illuminate a warning light, vibrate a haptic device, display a visual message, or generate an audio message. The warning signal may indicate the presence of the object beneath the gate 46, warning the operator to not close the gate 46 until the object is no longer positioned under the gate 46.

In another example implementation, the control signal may include a communication signal communicated to the communicator 34. The communication signal is generally indicated by box 128 shown in FIG. 3. The communication signal may be configured to control the communicator 34 to display recommended operating instructions 132. For example, the communication signal may cause the communicator 34 to generate a message requesting the operator move the baling system 20 relative to the detected object so that the object is no longer positioned under the gate 46, thereby allowing the gate 46 to move into the closed position without contacting the object.

In one implementation, the control signal may include a drive system signal communicated to the drive system 28 of the tow vehicle 22. The drive system signal is generally indicated by box 134 shown in FIG. 3. The drive system signal may be configured to control the drive system 28 of the tow vehicle 22. The drive system signal may cause the drive system 28 to automatically move the baling system 20 relative to the detected object, thereby allowing the gate 46 to move into the closed position without contacting the object. For example, the drive system 28 signal may release a brake and/or increase a throttle of the prime mover 30 to generate sufficient torque to move the baling system 20.

In another aspect of the disclosure, when an object is not detected beneath the gate 46, i.e., there is nothing that will interfere with movement of the gate 46 from the open position into the closed position, the baling controller may communicate a gate close signal to the gate actuator 60. The step of communicating the gate close signal is generally indicated by box 136 shown in FIG. 3. The gate 46 close signal is configured to control the gate actuator 60 to move the gate 46 from the open position into the closed position in preparation for resumed baling activities.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A round baler implement (24) comprising:
a support structure (36);
a plurality of ground engaging elements (38) coupled to the support structure (36) for moveably supporting the support structure (36) relative to a ground surface (26);
a housing (44) attached to the support structure (36);
a gate (46) rotatably attached to the housing (44) for rotation about a gate rotation axis (52) between a closed position and an open position;
an object detection sensor (76) positioned to detect data related to an object positioned vertically below the gate (46) when the gate (46) is disposed in the open position, and communicate a data signal indicative of the detected data;
a baler controller (78) having a processor (86) and a memory (88) including an object detection algorithm (90) stored thereon, wherein the processor (86) is operable to execute the bale detection algorithm (90) to:
receive the data signal from the object detection sensor (76);
determine the presence of an object positioned below the gate (46), from the data signal, that may interfere with movement of the gate (46) from the open position into the closed position; and
communicate a control signal when the object is determined to be positioned to interfere with movement of the gate (46) from the open position into the closed position to prevent the gate (46) from closing onto the object.

2. The round baler implement (24) set forth in claim 1, wherein the object detection sensor (76) is positioned to aim substantially vertically downward when the gate (46) is disposed in the open position to detect data vertically below the gate (46) when the gate (46) is disposed in the open position.

3. The round baler implement (24) set forth in claim 1 or 2, wherein the gate (46) includes a forward-facing end (80) and a bottom surface (82) intersecting each other along a lower forward edge extending transversely across a width of the gate (46), with the forward-facing end (80) extending substantially vertically and abutting the housing (44) and the bottom surface (82) disposed substantially horizontal relative to the ground surface (26) when the gate (46) is disposed in the closed position, and with the forward-facing end (80) disposed substantially horizontal and the bottom surface (82) positioned substantially vertically relative to the ground surface (26) when the gate (46) is disposed in the open position.

4. The round baler implement (24) according to at least one of the preceding claims, wherein the object detection sensor (76) is mounted to the gate (46) proximate the lower forward edge of the gate (46).

5. The round baler implement (24) according to at least one of the preceding claims, wherein the object detection sensor (76) includes one of an ultra-sonic sensor, a lidar sensor, a radar sensor, or an image sensor.

6. The round baler implement (24) according to at least one of the preceding claims, further comprising a gate actuator (60) selectively controllable to move the gate (46) between the open position and the closed position.

7. The round baler implement (24) set forth in claim 6, wherein the control signal includes an actuator control signal operable to control the gate actuator (60) to maintain the gate (46) in the open position.

8. The round baler implement (24) according to at least one of the preceding claims, wherein the control signal includes a communication signal operable to control a communicator (34) to generate a warning message.

9. The round baler implement (24) according to at least one of the preceding claims, wherein the control signal includes a communication signal operable to control a communicator (34) to display operating instructions requesting an operator move the support structure (36) relative to the detected object.

10. The round baler implement (24) according to at least one of the preceding claims, wherein the control signal includes a drive system signal operable to control a drive system (28) of an associated tow vehicle (22) for moving the support structure (36) relative to the detected object.

11. The round baler implement (24) according to at least one of the preceding claims, wherein the processor (86) is operable to execute the bale detection algorithm (90) to communicate a gate (46) close signal for initiating movement of the gate (46) from the open position to the closed position when an object is not detected beneath the gate (46).

12. A baling system comprising a tow vehicle (22) coupled to a round baler implement (24), in particular a round baler implement (24) according to at least one of the claims 1 to 11, for moving the round baler implement (24) across a ground surface.

13. A baling system according to claim 12,
wherein the round baler implement includes:
a housing;
a gate rotatably attached to the housing for rotation about a gate rotation axis between a closed position and an open position;
a gate actuator selectively controllable to move the gate between the open position and the closed position;
an object detection sensor positioned to detect data related to an object positioned vertically below the gate when the gate is disposed in the open position, and communicate a data signal indicative of the detected data;
a baler controller having a processor and a memory including an object detection algorithm stored thereon, wherein the processor is operable to execute the bale detection algorithm to:
receive the data signal from the object detection sensor;
determine the presence of an object positioned below the gate, from the data signal, that may interfere with movement of the gate from the open position into the closed position;
communicate an actuator control signal to the gate actuator for controlling the gate actuator to maintain the gate in the open position when the object is determined to be positioned to interfere with movement of the gate from the open position into the closed position to prevent the gate from closing onto the object.

14. The baling system set forth in claim 12 or 13, wherein the tow vehicle includes a drive system for propelling the tow vehicle and the round baler implement, and wherein the processor is operable to execute the bale detection algorithm to communicate a drive system signal for controlling the drive system of the tow vehicle to move the round baler implement relative to the detected object.

15. The baling system according to at least one of the claims 12 to 14, wherein the processor is operable to execute the bale detection algorithm to communicate a gate close signal to the gate actuator for initiating movement of the gate from the open position to the closed position when an object is not detected beneath the gate.
